Europäisches Patentamt

European Patent Office

Office européen des brevets

(19)

(11) EP 0 796 016 B1

(12) **EUROPÄISCHE PATENTSCHRIFT**

(45) Veröffentlichungstag und Bekanntmachung des Hinweises auf die Patenterteilung:
**31.05.2000 Patentblatt 2000/22**

(51) Int Cl.⁷: $H04N\ 7/30$, $H04N\ 7/36$, $H04N\ 7/26$

(21) Anmeldenummer: **97103546.4**

(22) Anmeldetag: **04.03.1997**

(54) **Verfahren zur Bearbeitung von Bildpunkten eines Bildsegments durch einen Rechner**

Method for processing the pixels of an image segment by a computer

Méthode de traitement par ordinateur de pixels d'un segment d'image

(84) Benannte Vertragsstaaten:
**DE FR GB IT**

(30) Priorität: **13.03.1996 DE 19609860**

(43) Veröffentlichungstag der Anmeldung:
**17.09.1997 Patentblatt 1997/38**

(73) Patentinhaber: **SIEMENS AKTIENGESELLSCHAFT 80333 München (DE)**

(72) Erfinder:
- **Pandel, Jürgen, Dr. 83620 Feldkirchen-Westerham (DE)**
- **Kaup, Andre, Dr. 85635 Höhenkirchen (DE)**

(56) Entgegenhaltungen:
**EP-A- 0 649 258**

- **SHIH-FU CHANG ET AL: "Transform coding of arbitrarily-shaped image segments" PROCEEDINGS ACM MULTIMEDIA 93, PROCEEDINGS OF FIRST ACM INTERNATIONAL CONFERENCE ON MULTIMEDIA, ANAHEIM, CA, USA, 2-6 AUG. 1993, ISBN 0-89791-596-8, 1993, NEW YORK, NY, USA, ACM, USA, Seiten 83-90, XP000607524**
- **SIKORA T ET AL: "Efficiency of shape-adaptive 2-D transforms for coding of arbitrarily shaped image segments" IEEE TRANSACTIONS ON CIRCUITS AND SYSTEMS FOR VIDEO TECHNOLOGY, JUNE 1995, USA, Bd. 5, Nr. 3, ISSN 1051-8215, Seiten 254-258, XP000517131**

- **SIKORA T ET AL: "Shape-adaptive DCT for generic coding of video" IEEE TRANSACTIONS ON CIRCUITS AND SYSTEMS FOR VIDEO TECHNOLOGY, FEB. 1995, USA, Bd. 5, Nr. 1, ISSN 1051-8215, Seiten 59-62, XP000488410**
- **GILGE M ET AL: "Coding of arbitrarily shaped image segments based on a generalized orthogonal transform" SIGNAL PROCESSING: IMAGE COMMUNICATION, OCT. 1989, NETHERLANDS, Bd. 1, Nr. 2, ISSN 0923-5965, Seiten 153-180, XP000234866**
- **MATSUDA I ET AL: "Adaptive KL-transform coding of images based on variable block shapes" ELECTRONICS AND COMMUNICATIONS IN JAPAN, PART 1 (COMMUNICATIONS), AUG. 1994, USA, Bd. 77, Nr. 8, ISSN 8756-6621, Seiten 1-12, XP000485779**
- **CHEN H H ET AL: "A block transform coder for arbitrarily shaped image segments" PROCEEDINGS ICIP-94 (CAT. NO.94CH35708), PROCEEDINGS OF 1ST INTERNATIONAL CONFERENCE ON IMAGE PROCESSING, AUSTIN, TX, USA, 13-16 NOV. 1994, ISBN 0-8186-6952-7, 1994, LOS ALAMITOS, CA, USA, IEEE COMPUT. SOC. PRESS, USA, Seiten 85-89 vol.1, XP002029827**
- **ITOH S ET AL: "Adaptive transform coding of images based on variable-shape-blocks" SIGNAL PROCESSING VI - THEORIES AND APPLICATIONS. PROCEEDINGS OF EUSIPCO-92, SIXTH EUROPEAN SIGNAL PROCESSING CONFERENCE, BRUSSELS, BELGIUM, 24-27 AUG. 1992, ISBN 0-444-89587-6, 1992, AMSTERDAM, NETHERLANDS, ELSEVIER, NETHERLANDS, Seiten 1251-1254 vol.3, XP000356468**

**Beschreibung**

Die Codierung von Videosignalen entsprechend beispielsweise den Bildcodierungs-Standards H. 261, H.263, MPEG1 sowie MPEG2 basiert häufig auf einer blockorientierten diskreten Cosinustransformation (DCT). Diese blockorientierten Codierungsverfahren eignen sich jedoch nicht mehr für Bildcodierungsverfahren, die nicht mehr auf rechteckigen Blöcken basieren, sondern in denen beispielsweise Objekte aus einem Bild segmentiert werden und die Segmente des Bildes codiert werden. Diese Verfahren werden als regionenbasierte oder objektbasierte Bildcodierungsverfahren bezeichnet. Dabei erfolgt eine Segmentierung von in digital vorliegenden Bildern entsprechend der in der Szene vorkommenden Objekte. Es wird eine separate Codierung dieser segmentierten Objekte anstelle der Codierung von Bildblöcken wie bei blockbasierten Bildcodierungsverfahren durchgeführt. Dabei erfolgt üblicherweise die Codierung durch Modellierung der segmentierten Objekte und anschließende Übertragung der Modellierungsparameter dieser segmentierten Objekte.

Nach der Übertragung der Bildinformation von einem Sender zu einem Empfänger werden die einzelnen Objekte des Bildes im Empfänger anhand der übertragenen Modellierungsparameter wieder rekonstruiert.

Eine Möglichkeit zur Modellierung der Objekte besteht in einer Reihenentwicklung der Bildfunktion nach einer Menge von geeignet gewählten Basisfunktionen. Die Modellierungsparameter entsprechen dann den Entwicklungskoeffizienten dieser Bildfunktion. Eine solche Modellierung des Bildes ist Grundlage der Transformationscodierung. Sollen einzelne, beliebig berandete Objekte des Bildes codiert werden, ist eine Transformation für Segmente mit beliebiger, in der Regel nicht konvexer Berandung erforderlich.

Für eine solche Transformation existieren bisher zwei grundsätzliche Ansätze.

In dem Verfahren, welches in dem Dokument [1] beschrieben wird, wird das gegebene Bildsegment zunächst in ein umschreibendes Rechteck kleinstmöglichen Ausmaßes eingebettet. Zu diesem Reckteck kann eine diskrete Cosinus-Transformation (DCT) angegeben werden, die vollständig durch die Basisfunktionen der Transformation spezifiziert ist. Um diese Transformation an die Segmentform anzupassen, werden die auf dem Rechteck definierten Basisfunktionen nacheinander bezüglich der Form des Segmentes orthogonalisiert. Die resultierenden orthogonalen, formabhängigen Basisfunktionen bilden dann die gesuchte segmentangepasste Transformation.

Ein Nachteil dieses Lösungsansatzes ist darin zu sehen, daß ein hoher Bedarf an Rechenleistung und an Speicherplatz zur Durchführung dieses Verfahrens vorhanden ist. Ferner weist dieses bekannte Verfahren den Nachteil auf, daß über die Eignung der resultierenden Transformation zur Datenkompression keine sicheren Aussagen getroffen werden können, da die Transformation wesentlich von der Orthogonalisierungsreihenfolge, und damit von der speziellen Implementierung, abhängt.

In dem Dokument [2] ist ein Verfahren beschrieben, bei dem das gegebene Bildsegment getrennt nach Zeilen und Spalten transformiert wird. Dazu werden zunächst alle Zeilen des Bildsegments links ausgerichtet und nacheinander einer eindimensionalen horizontalen Transformation unterzogen, deren Transformationslänge jeweils der Zahl der Bildpunkte in der entsprechenden Zeile entspricht. Die resultierenden Koeffizienten werden anschließend ein weiteres Mal in vertikaler Richtung transformiert.

Dieses Verfahren birgt insbesondere den Nachteil in sich, daß die Korrelationen der Helligkeitswerte der Bildpunkte (Ähnlichkeiten der Bildpunkte) aufgrund der Umsortierung der Bildpunkte nicht vollständig ausgenutzt werden können.

Zur Verbesserung dieses aus dem Dokument [2] bekannten Verfahrens wird in dem Dokument [3] ein Verfahren beschrieben, bei dem eine für ein einfaches Bildmodell angepasste Transformation für konvexe Bildsegmentformen durchgeführt wird. Hierbei sind allerdings nur solche Bildsegmentformen zugelassen, die beim Durchlaufen von Zeilen oder Spalten keine Unterbrechungen (Löcher) aufweisen.

Die oben beschriebenen bekannten Verfahren weisen weiterhin den Nachteil auf, daß wegen der variablen Transformationslänge Stadardtransformationsverfahren bzw. Standardbausteine für die Durchführung der Transformation nicht mehr eingesetzt werden können.

Standardbildtransformationsverfahren sind beispielsweise aus [4] bekannt. Dadurch, daß die Standardbildtransformationsverfahren nicht mehr angewendet werden können, entstehen erhebliche Kosten für Codierungseinheiten, die nach den bekannten, oben beschriebenen Verfahren arbeiten.

Somit liegt der Erfindung das Problem zugrunde, ein Verfahren zur Bearbeitung von Bildpunkten eines Bildsegments beliebiger Form anzugeben, das als Ergebnis Bildsegemente einer Bildsegmentzielform aufweist, wodurch weiterhin Standardbildtransformationsverfahren und Codierungseinheiten zu deren Durchführung eingesetzt werden können.

Das Problem wird durch das Verfahren gemäß Patentanspruch 1 gelöst.

Dabei werden die Bildpunkte eines Bildsegments, denen Helligkeitswerte zugeordnet werden, einer konformen Abbildung unterzogen. Ziel dieser Abbildung ist es, daß mindestens die Helligkeitswerte der Bildpunkte, die sich an einem Rand des Bildsegments befinden, auf Bildpunkte eines Randes innerhalb eines Zielbildsegments vorgebbarer Form abgebildet werden. Nachdem die Helligkeitswerte dieser Abbildung unterzogen wurden, werden die abgebildeten Helligkeitswerte in beliebiger Weise interpoliert.

Auf diese Weise ist es ohne größeren Aufwand möglich, auch eine objektbasierte Bildcodierung mit blockbasierten Bildcodierungsverfahren durchzuführen. Damit werden erhebliche Kosteneinsparungen im Vergleich zu vollständigen Neuentwicklungen von objektbasierten Bildcodern ermöglicht.

Vorteilhafte Weiterbildungen des erfindungsgemäßen Verfahrens ergeben sich aus den abhängigen Ansprüchen.

Es ist vorteilhaft zur Verbesserung der Transformationsergebnisse, daß nicht nur die Helligkeitswerte der Randbildpunkte des Bildsegments der Abbildung unterzogen werden, sondern auch die Helligkeitswerte der weiteren Bildpunkte des Bildsegments. Diese werden vorteilhafterweise in einen Bereich transformiert, der sich zwischen dem Bereich des Bildpunktes befindet, dem der jeweilige Helligkeitswert vor der Abbildung zugeordnet war, und dem Rand des Zielbildsegments.

Ferner ist es für den Spezialfall, daß das Zielbildsegment eine rechteckige Form aufweist, was dem Fall entspricht, daß anschließend eine blockbasierte Bildcodierung auf die Bildpunkte des Zielbildsegments angewendet werden soll, vorteilhaft, daß die Abbildung der Helligkeitswerte entlang einer Geradenrichtung durch das Zielsegment, auf deren Gerade dieser Geradenrichtung jeweils der Bildpunkt liegt, dessen zugeordneter Helligkeitswert abgebildet wird, erfolgt. Dies entspricht einfach einer "Verschiebung" des Helligkeitswerts entlang der entsprechenden Geraden. Vorteilhaft an dieser Weiterbildung des erfindungsgemäßen Verfahrens ist vor allem die Einfachheit und somit die schnelle Durchführbarkeit dieser Vorgehensweise im Rahmen der Weiterbildung des erfindungsgemäßen Verfahrens.

Weitere Vereinfachung kann dadurch erreicht werden, daß die konforme Abbilung in einer Weise erfolgt, daß die Verschiebung der Helligkeitswerte entlang der Geraden nicht nur für das jeweilige Randpixel erfolgt, sondern für alle Bildpunkte des Bildsegments, jeweils proportional zu einem Abbilungsfaktor, der sich beispielsweise ergibt aus dem Verhältnis der Größe des Bildsegments und der Größe des Zielbildsegments.

Ferner ist es vorteilhaft, wenn die Interpolation zwischen den Helligkeitswerten nach der Abbildung durch eine sehr einfache und damit schnell durchführbare Interpolation erfolgt, beispielsweise durch eine lineare Interpolation der Helligkeitswerte.

In den Figuren ist ein Ausführungsbeispiel des erfindungsgemäßen Verfahrens dargestellt, welches im weiteren näher erläutert wird.

Es zeigen

Fig. 1    ein Ablaufdiagramm, in dem die einzelnen Verfahrensschritte des erfindungsgemäßen Verfahrens dargestellt sind;

Fig. 2    eine Skizze, in der ein Bild mit einzelnen Bildpunkten und einem Bildsegment beispielhaft dargestellt ist;

Fig. 3    Bildpunkte und deren zugehörige Helligkeitswerte des Bildsegments vor und nach erfolgter konformer Abbilung;

Fig. 4    ein Diagramm, in dem ein beispielhafter Verlauf der Interpolation der Helligkeitswerte in einem Diagramm dargestellt ist;

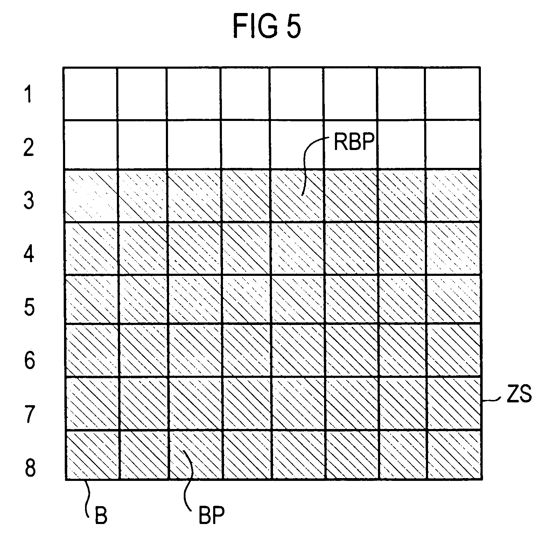

Fig. 5    eine Skizze, in der das Bild mit dem Zielsegment dargestellt ist;

Fig. 6    eine Anordnung mit einer Kamera, zwei Rechnern und zwei Bildschirmen;

Fig. 7    ein Ablaufdiagramm, in dem zusätzliche Verfahrensschritte von Weiterbildungen des erfindungsgemäßen Verfahrens dargestellt sind.

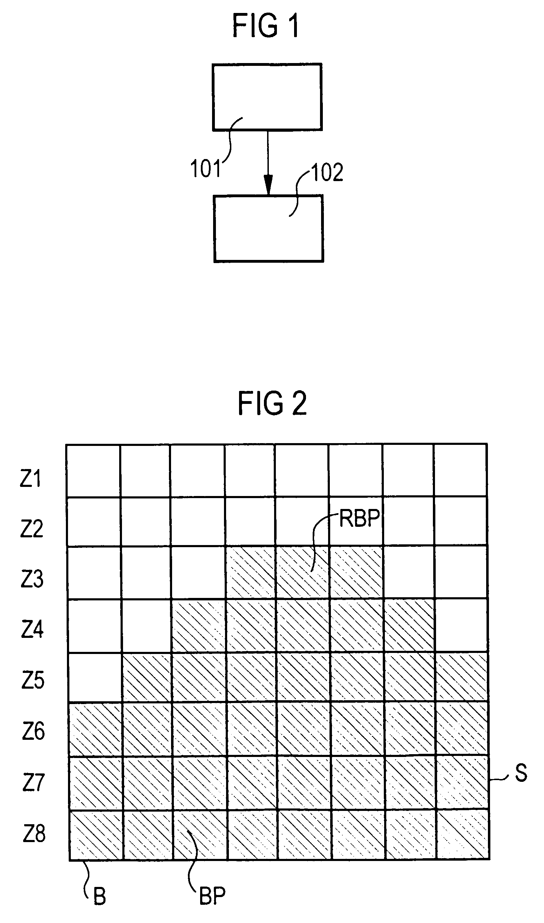

In einem ersten Schritt 101 werden die Helligkeitswerte, die Bildpunkten BP eines Bildsegments S vorgebbarer Form eines digitalen Bildes B zugeordnet werden, einer konformen Abbildung unterzogen (vgl. Figur 1). Hierbei ist die Anzahl von Bildpunkten BP, die das Bildsegment S aufweist, beliebig. Die konforme Abbildung erfolgt auf die Weise, daß zumindest Helligkeitswerte von Randbildpunkten RBP des Bildsegments S auf Bildpunkte BP eines Zielbildsegments ZS abgebildet werden, die am Rand des Zielbildsegments ZS liegen.

Unter Randbildpunkten RBP sind diejenigen Bildpunkte BP des Bildsegments S zu verstehen, die jeweils auf dem Rand des Bildsegments S liegen.

Nachdem diese Abbildung erfolgt ist, wird zwischen den Bildpunkten BP eine Interpolation der Helligkeitswerte durchgeführt 102 (vgl. Fig. 1).

In Fig. 2 ist ein triviales Beispiel für das digitale Bild B, welches in diesem Spezialfall 8 x 8 Bildpunkte BP aufweist, dargestellt. Ferner ist in der Fig. 2, lediglich der einfachen Erläuterung dienend, ein Bildsegment S dargestellt mit durch eine Schraffur markierten Bildpunkten, wodurch angedeutet wird, daß diese Bildpunkte BP zu dem Bildsegment S gehören. Ferner ist das Zielbildsegment ZS dargestellt.

In diesem einfachen Beispielsfall soll das erfindungsgemäße Verfahren im weiteren lediglich anhand von drei Bildpunkten einer dritten Bildzeile Z3 erläutert werden.

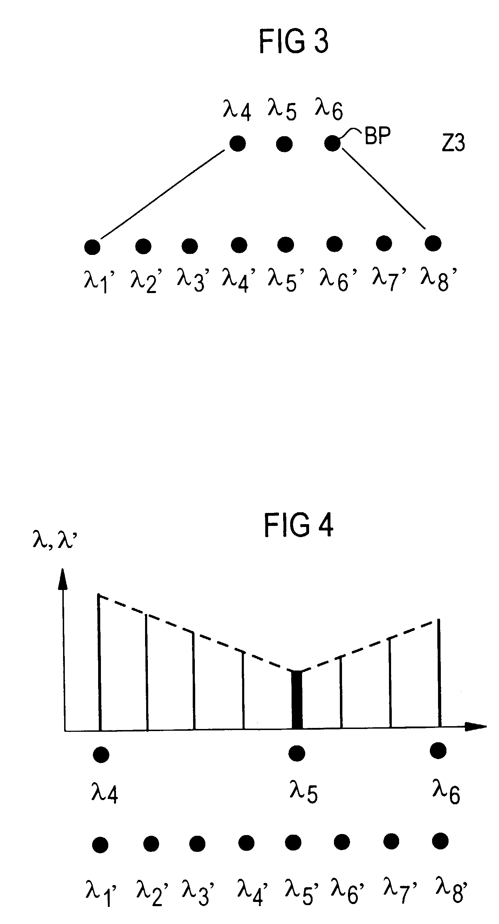

Den einzelnen Bildpunkten der dritten Bildzeile Z3 ist, wie in Fig. 3 dargestellt, jeweils ein Helligkeitswert und/oder ein Farbwert zugeordnet. Hierbei ist jeder Helligkeitswert oder Farbwert mit dem Buchstaben $\lambda$ gekennzeichnet und mit einem eindeutigen Index, der jeweils der Spaltenzahl entspricht, in der sich der Bildpunkt innerhalb des digitalen Bildes B befindet. Es ergeben sich also für die Bildpunkte BP des Bildsegments S in der dritten Bildzeile Z3 die drei Helligkeitswerte oder Farbwerte $\lambda_4, \lambda_5, \lambda_6$. Im weiteren wird zur Vereinfachung nur noch von Heligkeitswerten gesprochen. Dem Fachmann ist es jedoch klar, daß jeweils das gleiche auch für Farbwerte gilt.

Da das Zielbildsegment ZS in diesem Beispielsfall die gesamte Breite des 8 x 8 großen Bildes B aufweist, wird die konforme Abbildung in einer Weise durchgeführt, daß der Helligkeitswert $\lambda_4$ auf den Bildpunkt der ersten Spalte der dritten Bildzeile Z3 abgebildet wird. Dies ergibt einen transformierten Helligkeitswert $\lambda_1'$ für diesen Bildpunkt BP der ersten Spalte in der dritten Bildzeile Z3. Der Helligkeitswert $\lambda_1'$ ist dabei in etwa gleich dem Helligkeitswert $\lambda_4$. Prinzipiell das gleiche geschieht durch die konforme Abbildung mit dem Helligkeitswert $\lambda_6$, bezogen auf den Bildpunkt BP in der achten Spalte der dritten Bildzeile Z3. Damit ergibt sich ein neuer Helligkeitswert $\lambda_8'$ für diesen am äußersten rechten Rand des Zielbildsegments ZS liegenden Bildpunkt BP.

Diese Vorgehensweise soll jedoch nur den einfachen, trivialen Fall verdeutlichen. Allgemein ist jede konforme Abbildung in dem Verfahren einsetzbar.

Konform bedeutet in diesem Zusammenhang, daß die Abbildung eineindeutig ist, damit die durchgeführte Abbildung auch wieder umkehrbar ist.

Auch die Form des Zielsegments ZS ist keinesfalls auf eine rechteckige Form, noch weniger auf eine quadratische Form des Zielbildsegments ZS beschränkt. Die Form des Zielbildsegments ist allgemein beliebig. Es ist lediglich notwendig, die prinzipielle konforme Abbildung der entsprechenden Form des Zielbildsegments ZS anzupassen.

Die Interpolation der Helligkeitswerte erfolgt nun zwischen den neuen Helligkeitswerten $\lambda_1'$ und $\lambda_8'$ und beispielsweise einem nicht veränderten Helligkeitswert $\lambda_5$, der in diesem einfachen Beispiel den gleichen Helligkeitswert für den entsprechenden Bildpunkt $\lambda_5'$ aufweist.

In Figur 4 ist in einem einfachen Diagramm jeweils der Helligkeitswert nach der Abbildung $\lambda_4'$, $\lambda_5'$ und $\lambda_6'$ quantitativ skizziert.

Die Interpolation in diesem einfachen Beispiel zwischen diesen drei Helligkeitswerten erfolgt linear, woraus sich in äquidistanten Abständen die Helligkeitswerte für die weiteren Bildpunkte des Zielbildsegments ergeben, wie durch die Werte für $\lambda_2'$, $\lambda_3'$ $\lambda_4'$, $\lambda_6'$, $\lambda_7'$ angedeutet ist. Die Interpolation der Helligkeitswerte kann jedoch je nach Bedarf der Genauigkeit mit jeder beliebigen Funktion durchgeführt werden. In einer Weiterbildung des erfindungsgemäßen Verfahrens ist es jedoch vorteilhaft, die Interpolation linear durchzuführen, um aufgrund der Einfachheit der linearen Interpolation benötigte Rechenzeit bei der Durchführung des Verfahrens einzusparen.

In einer Weiterbildung des erfindungsgemäßen Verfahrens ist es vorgesehen, zunächst in einer ersten Geradenrichtung die im vorigen beschriebene Abbildung durchzuführen, und dann in einer zweiten Geradenrichtung, die vorteilhafterweise in etwa senkrecht zu der ersten Geradenrichtung liegt, die Abbildung durchzuführen.

Bei der konformen Abbildung sind verschiendenste Varianten bei Weiterbildungen des erfindungsgemäßen Verfahrens vorgesehen. Für den Spezialfall eines rechteckförmigen Zielbildsegments ZS ist es in einer Weiterbildung des Verfahrens vorgesehen, aus der Abbildung der Helligkeitswerte entlang der Geradenrichtung einen Abbildungsfaktor A jeweils für eine gerade Richtung zu ermitteln, und dann die einzelnen Helligkeitswerte des Bildsegments S durch die konforme Abbildung proportional zu dem Abbildungsfaktor entlang der Geradenrichtung zu verschieben.

Allgemein kann man sich das Verfahren als ein "Aufblasen" eines auf eine zweidimensionale Fläche transformierten Ballons vorstellen. Dieses "Aufblasen" entspricht für den Spezialfall der rechteckigen Form des Zielbildsegments ZS eben gerade beispielsweise einer Verschiebung der Helligkeitswerte entlang mindestens einer Geradenrichtung. Die Geradenrichtung kann beliebig gewählt werden, beispielsweise kann die Geradenrichtung die Diagonale des Zielbildsegments ZS oder auch eine Horizontale oder eine Vertikale des Zielbildsegments ZS sein.

Der Abbildungsfaktor A ergibt sich dann beispielsweise aus:

$$A = \frac{n}{m},$$

wobei mit

n eine Anzahl von Bildpunkten bezeichnet wird, die auf der Gerade liegen und in dem Bildsegment S liegen und mit

m eine Anzahl von Bildpunkten bezeichnet wird, die auf der Geraden liegen und in dem Zielbildsegment ZS liegen.

Eine Sonderbehandlung kann unter Umständen bei Bildsegmenten S erforderlich sein, die eine nichtkonvexe Form aufweisen. In diesem Fall müssen beispielsweise nicht zusammenhängende Zeilenstücke auf eine vollständige Zeile abgebildet werden. Dies kann in einer Weiterbildung des Verfahrens dadurch geschehen, daß die zwei nicht miteinander verbundenen Teilbildzeilen entsprechend ihres Größenverhältnisses gestreckt werden, oder aber auch durch eine Interpolation des Helligkeitsverlaufs über die Lücke zwischen den beiden Teilzeilen hinweg. Zweckmäßigerweise sollte die Reihenfolge und die Richtung der Abbildung in einer Weise gewählt werden, daß an einer Übergangsstelle, also einer Verbindungsstelle des ersten Teilzeilenstücks und einem zweiten Teilzeilenstück kein Helligkeitssprung der Helligkeitswerte auftreten kann.

Ferner ist das erfindungsgemäße Verfahren in keinster Weise auf die diskrete Cosinustransformation (DCT) beschränkt, sondern es kann auch bei allen anderen bekannten Codierungsverfahren, wie z. B. der sogenannten Wavelet-Transformation bzw. der sogenannten Sub-Band-Bildcodierungsverfahren auf der Basis von Vektorquantisierung sehr vorteilhaft eingesetzt werden.

Hierbei ist es besonders vorteilhaft, das Verfahren im Rahmen einer Wavelet-Transformation auf ein gesamtes segmentiertes Objekt anzuwenden. Durch konforme Abbildung der Helligkeitswerte könnte dieses Objekt in eine Form gebracht werden, die für die Wavelet-Transformation besonders günstig ist. Somit kann durch das erfindungsgemäße Verfahren vorhandenes Wissen über Vorteile einer Bildcodierungstransformation schon im Rahmen dieser Abbildung verarbeitet werden.

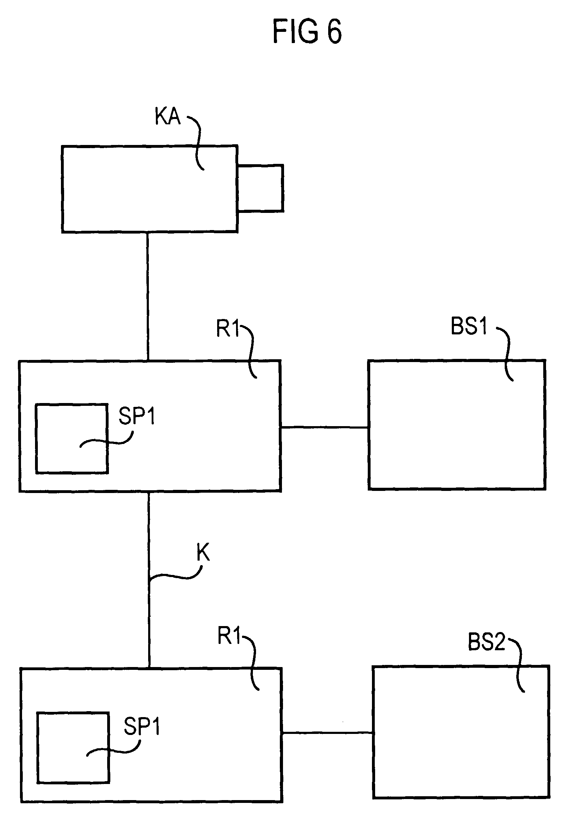

In Fig. 6 ist u. a. ein Rechner R1 dargestellt, mit dem das erfindungsgemäße Verfahren notwendigerweise durchgeführt wird.

Ferner ist in Fig. 6 eine Kamera KA dargestellt, mit der eine Folge von Bildern aufgenommen wird, welche in dem Rechner R1 zu einer Folge von digitalen Bildern B umgewandelt wird. Die digitalen Bilder B werden in einem Speicher SP1 des Rechners R1 gespeichert. Ferner ist in dieser Anordnung für den Rechner R1 ein Bildschirm BS1 vorgesehen.

Bei einer Übertragung des digitalisierten Bildes B wird vor der Übertragung des digitalisierten Bildes B das erfindungsgemäße Verfahren auf die einzelnen Bildsegmente S angewendet und dann auf die Zielbildsegmente ZS die Standardbildtransformationscodierung. Die daraus resultierenden Koeffizienten werden über einen Kanal K zu einem zweiten Rechner R2 übertragen, wo sie in einem zweiten Speicher SP2 gespeichert werden. Nach Durchführung der inversen Bildtransformationscodierung und der inversen konformen Abbildung wird das digitalisierte Bild B wieder in dem zweiten Rechner R2 rekonstruiert und einem Benutzer auf dem zweiten Bildschirm BS2 dargestellt.

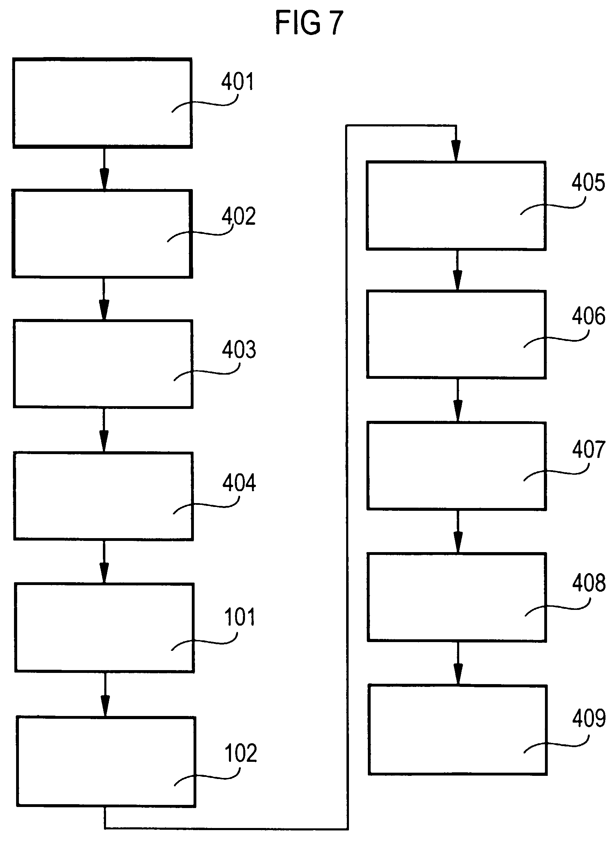

In Fig. 7 sind einige zusätzliche Verfahrensschritte von Weiterbildungen des erfindungsgemäßen Verfahrens dargestellt. Mit der Kamera KA werden beispielsweise ein oder mehrere Bilder aufgenommen 401. Das Bild, bzw. die Bilder werden in dem Rechner R1 digitalisiert 402, wobei den einzelnen Bildpunkten BP des Bildes B Helligkeitswerte zugeordnet werden 403. Das digitalisierte Bild B wird in einzelne Bildsegmente S aufgeteilt 404. Für die einzelnen Bildsegmente S, die jeweils auf ein vorgebbares Zielbildsegment ZS abgebildet werden sollen, werden die erfindungsgemäßen Verfahrensschritte 101 und 102 durchgeführt. Nach Durchführung des erfindungsgemäßen Verfahrens wird das entsprechende Standardbildtransformationsverfahren auf die den Bildpunkten BP zugeordneten Helligkeitswerte angewendet 405.

Die daraus ermittelten Koeffizienten werden in einem weiteren Schritt 406 von dem Rechner R1 zu dem zweiten Rechner R2 über den Kanal K, über den die beiden Rechner miteinander gekoppelt sind, übertragen.

In dem zweiten Rechner R2 werden die Koeffizienten der inversen Bildtransformationscodierung unterzogen 407. Anschließend wird die inverse konforme Abbildung auf die Ergebnisse der inversen Bildtransformationscodierung angewendet 408. Nach der inversen konformen Abbildung ist es nunmehr möglich, in einem letzten Schritt 409 das digitale Bild B zu rekonstruieren und das rekonstruierte digitale Bild B dem Benutzer auf dem Bildschirm BS1 oder dem zweiten Bildschirm BS2 darzustellen.

In diesem Dokument wurden folgende Veröffentlichungen zitiert:

[1] M. Gilge, T. Engelhardt und R. Mehlan, Coding of arbitrarily shaped image segments based on a generalized orthogonal transform, Singnal Processing: Image Communication 1, S. 153-180, Oktober 1989

[2] T.Sikora und Béla Makai, Shape-adaptive DCT for generic coding of video, IEEE Trans. Circuits and Systems for Video Technology 5, S. 59-62, Februar 1995

[3] T. Sikora, S. Bauer und Béla Makai, Efficiency of shape-adaptive 2-D transforms for coding of arbitrary shaped image segments, IEEE Trans.Circuits and Systems for Video Technology 5, S. 254-258, Juni 1995

[4] R. J. Clarke: Transform Coding of Images, Academic Press, London, S. 72 - 134, 1985

**Patentansprüche**

1. Verfahren zur Bearbeitung von Bildpunkten eines Bildsegments (S), welches eine beliebige Form und eine beliebige Anzahl von Bildpunkten (BP) aufweist, denen jeweils ein Helligkeitswert zugeordnet wird, durch einen Rechner (R1),

   - bei dem die Helligkeitswerte der Bildpunkte (BP) einer konformen Abbildung unterzogen werden, so daß mindestens die Helligkeitswerte der Bildpunkte (RBP), die sich an einem Rand des Bildsegments (S) befinden, auf Bildpunkte (BP) eines Rands innerhalb eines Zielbildsegments (ZS) vorgebbarer Form abgebildet werden (101),
   - bei dem zwischen den so abgebildeten Bildpunkten (BP) des Zielbildsegments (ZS) eine Interpolation der Helligkeitswerte der Bildpunkte (BP) durchgeführt wird (102).

2. Verfahren nach Anspruch 1, bei dem zusätzliche Helligkeitswerte anderer Bildpunkte (BP) des Bildsegments (S) der konformen Abbildung unterzogen werden, wobei die zusätzlichen Helligkeitswerte auf Bildpunkte des Zielbildsegments (ZS) abgebildet werden, die nicht auf dem Rand des Zielbildsegments (ZS) liegen.

3. Verfahren nach Anpruch 1 oder 2,
bei dem zusätzliche Helligkeitswerte anderer Bildpunkte (BP) des Bildsegments (S) der konformen Abbildung unterzogen werden, wobei die zusätzlichen Helligkeitswerte auf Bildpunkte (BP) des Zielbildsegments (ZS) abgebildet werden, die zwischen dem Rand des Zielbildsegments (ZS) und dem Bildpunkt (BP) liegen, dem der entsprechende Helligkeitswert vor der Abbildung zugeordnet war.

4. Verfahren nach einem der Ansprüche 1 bis 3,
bei dem das Zielbildsegment (ZS) eine rechteckige Form aufweist.

5. Verfahren nach einem der Ansprüche 1 bis 4,
bei dem die Abbildung in einer Verschiebung der Helligkeitswerte entlang mindestens jeweils einer Gerade einer beliebigen Geradenrichtung durch das Zielbildsegment (ZS) erfolgt, auf der jeweils der Bildpunkt (BP) liegt, dessen zugeordneter Helligkeitswert abgebildet wird.

6. Verfahren nach Anspruch 3 und 5,
bei dem die Abbildung der zusätzlichen Helligkeitswerte proportional zu einem Abbildungsfaktor (A) erfolgt.

7. Verfahren nach Anspruch 6,
bei dem sich der Abbildungsfaktor (A) ergibt aus:

$$A = \frac{n}{m},$$

wobei mit

n die Anzahl von Bildpunkten bezeichnet wird, die auf der Geraden und in dem Bildsegment liegen, und mit

m die Anzahl von Bildpunkten bezeichnet wird, die auf der Geraden und in dem Zielbildsegment liegen.

8. Verfahren nach einem der Ansprüche 5 bis 7,
bei dem die Abbildung entlang einer ersten Geradenrichtung und einer zweiten Geradenrichtung erfolgt.

9. Verfahren nach Anspruch 8,
bei dem die ersten Geradenrichtung in etwa senkrecht zu der zweiten Geradenrichtung gerichtet ist.

10. Verfahren nach einem der Ansprüche 1 bis 9,
bei dem die Interpolation durch eine lineare Interpolation gebildet wird.

## Revendications

1. Procédé de traitement de pixels d'un segment d'image (S), qui présente une forme et un nombre quelconques de pixels (BP), auxquels une valeur de luminosité est à chaque fois attribuée par un ordinateur (R1),

- dans lequel les valeurs de luminosité des pixels (BP) sont soumises à une représentation conforme de façon à ce qu'au moins les valeurs de luminosité des pixels (RPB) se trouvant au bord du segment d'image S soient représentés sur les pixels (BP) d'un bord à l'intérieur d'un segment d'image cible (ZS) de forme prédéfinissable (101),
- dans lequel une interpolation des valeurs de luminosité des pixels (BP) est effectuée entre les pixels (BP) du segment d'image cible (ZS) ainsi reproduits (102).

2. Procédé selon la revendication 1,
dans lequel des valeurs de luminosité supplémentaires d'autres pixels (BP) du segment d'image (S) sont soumises à la représentation conforme, les valeurs de luminosité supplémentaires étant représentées sur des pixels du segment d'image cible (ZS) qui ne se trouvent pas sur le bord du segment d'image cible (ZS).

3. Procédé selon la revendication 1 ou 2,
dans lequel des valeurs de luminosité supplémentaires d'autres pixels (BP) du segment d'image (S) sont soumises à la représentation conforme, les valeurs de luminosité supplémentaires étant représentées sur des pixels (BP) du segment d'image cible (ZS) se trouvant entre le bord du segment d'image cible (ZS) et le pixel (BP) auquel la valeur de luminosité correspondante était attribuée avant la représentation.

4. Procédé selon l'une des revendications 1 à 3,
dans lequel le segment d'image cible (ZS) présente une forme rectangulaire.

5. Procédé selon l'une des revendications 1 à 4,
dans lequel la représentation s'effectue dans un déplacement des valeurs de luminosité le long d'au moins à chaque fois une droite d'une direction de droite quelconque à travers le segment d'image cible (ZS), sur laquelle se trouve à chaque fois le pixel (BP) dont la valeur de luminosité attribuée est représentée.

6. Procédé selon les revendications 3 et 5,

dans lequel la représentation des valeurs de luminosité supplémentaires s'effectue proportionnellement à un facteur de représentation (A).

**7.** Procédé selon la revendication 6,
dans lequel le facteur de représentation (A) est calculé à partir de la formule:

$$A = n / m,$$

dans laquelle

n    désigne le nombre de pixels se trouvant sur la droite et dans le segment d'image et
m    le nombre de pixels se trouvant sur la droite et dans le segment d'image cible.

**8.** Procédé selon l'une des revendications 5 à 7,
dans lequel la représentation s'effectue le long d'une première et d'une deuxième direction de droite.

**9.** Procédé selon la revendication 8,
dans lequel la première direction de droite est orientée approximativement perpendiculairement à une deuxième direction de droite.

**10.** Procédé selon l'une des revendications 1 à 9,
dans lequel l'interpolation est constituée par une interpolation linéaire.

**Claims**

**1.** Method for processing pixels of an image segment (S) which has an arbitrary shape and an arbitrary number of pixels (BP) each of which is assigned a brightness value, by means of a computer (R1),

-    in which the brightness values of the pixels (BP) are subjected to a conformal mapping with the result that at least the brightness values of the pixels (RBP) which are located at an edge of the image segment (S) are mapped (101) onto pixels (BP) of an edge inside a target image segment (ZS) of prescribable shape and
-    in which an interpolation of the brightness values of the pixels (BP) is carried out (102) between the pixels (BP) thus mapped of the target image segment (ZS).

**2.** Method according to Claim 1, in which additional brightness values of other pixels (BP) of the image segment (S) are subjected to the conformal mapping, the additional brightness values being mapped onto pixels of the target image segment (ZS) which do not lie on the edge of the target image segment (ZS).

**3.** Method according to Claim 1 or 2, in which additional brightness values of other pixels (BP) of the image segment (S) are subjected to the conformal mapping, the additional brightness values being mapped onto pixels (BP) of the target image segment (ZS) which lie between the edge of the target image segment (ZS) and the pixel (BP) to which the corresponding brightness value had been assigned before the mapping.

**4.** Method according to one of Claims 1 to 3, in which the target image segment (ZS) has a rectangular shape.

**5.** Method according to one of Claims 1 to 4, in which the mapping is performed in a displacement of the brightness values along at least in each case one straight line of any direction through the target image segment (ZS) on which there respectively lies the pixel (BP) whose assigned brightness value is mapped.

**6.** Method according to Claims 3 and 5, in which the mapping of the additional brightness values is performed in a fashion proportional to a mapping factor (A).

**7.** Method according to Claim 6, in which the mapping factor (A) is yielded by:

$$A = \frac{n}{m}$$

n denoting the number of pixels which lie on the straight line and in the image segment, and
m denoting the number of pixels which lie on the straight line and in the target image segment.

**8.** Method according to one of Claims 5 to 7, in which the mapping is performed along a first straight-line direction and second straight-line direction.

**9.** Method according to Claim 8, in which the first straight-line direction is directed approximately perpendicular to the second straight-line direction.

**10.** Method according to one of Claims 1 to 9, in which the interpolation is formed by a linear interpolation.

# FIG 1

# FIG 2

# FIG 3

$\lambda_4 \quad \lambda_5 \quad \lambda_6$

BP

Z3

$\lambda_1' \quad \lambda_2' \quad \lambda_3' \quad \lambda_4' \quad \lambda_5' \quad \lambda_6' \quad \lambda_7' \quad \lambda_8'$

# FIG 4

$\lambda, \lambda'$

$\lambda_4 \qquad \lambda_5 \qquad \lambda_6$

$\lambda_1' \quad \lambda_2' \quad \lambda_3' \quad \lambda_4' \quad \lambda_5' \quad \lambda_6' \quad \lambda_7' \quad \lambda_8'$

## FIG 5

# FIG 6

# FIG 7